(19) Europäisches Patentamt
European Patent Office
Office européen des brevets

(11) EP 4 079 802 A1

(12) EUROPEAN PATENT APPLICATION
published in accordance with Art. 153(4) EPC

(43) Date of publication:
**26.10.2022 Bulletin 2022/43**

(21) Application number: **20902370.4**

(22) Date of filing: **15.12.2020**

(51) International Patent Classification (IPC):
***C08K 5/523*** *(2006.01)* ***C08L 23/00*** *(2006.01)*

(52) Cooperative Patent Classification (CPC):
**C08K 5/523; C08L 23/00**

(86) International application number:
**PCT/JP2020/046806**

(87) International publication number:
**WO 2021/125184 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2019 JP 2019228484**

(71) Applicant: **ADEKA CORPORATION**
**Arakawa-ku**
**Tokyo**
**116-8554 (JP)**

(72) Inventor: **SATO Akitomo**
**Saitama-shi, Saitama 336-0022 (JP)**

(74) Representative: **Gill Jennings & Every LLP**
**The Broadgate Tower**
**20 Primrose Street**
**London EC2A 2ES (GB)**

# (54) RESIN COMPOSITION, MOLDED ARTICLE THEREOF, AND METHOD FOR PRODUCING SAID RESIN COMPOSITION

(57) Provided are a resin composition that is capable of imparting excellent mechanical strength to a molded article and has excellent dimensional stability during molding, a molded article thereof, and a method for producing the resin composition. For a resin composition containing a polyolefin-based resin and a nucleating agent, a ratio t2/t1 between an isothermal crystallization time t2 at 135°C of the resin composition and an isothermal crystallization time t1 at 135°C of a nucleating agent-free resin composition having the same formulation as the resin composition except that the nucleating agent is not contained is 0.45 or more.

EP 4 079 802 A1

## Description

### TECHNICAL FIELD

The present invention relates to a resin composition, a molded article thereof, and a method for producing the resin composition, more specifically relates to a resin composition that is capable of imparting excellent mechanical strength to a molded article and has excellent dimensional stability during molding, a molded article thereof, and a method for producing the resin composition.

### BACKGROUND ART

Among various thermoplastic general-purpose resins, polyolefin-based resins are one of the resin compositions having the widest range of applications in terms of physical properties, molding processability, price, and the like, and are used in a wide range of applications.

Molded articles consisting of polyolefin-based resin may be required to have excellent mechanical strength. As one of the methods for imparting excellent mechanical strength to a molded article consisting of a polyolefin-based resin, a method in which a nucleating agent is added to a polyolefin-based resin is known. As a resin composition obtained by such a method, for example, Patent Document 1 proposes a resin composition containing a nucleating agent consisting of an aromatic phosphate metal salt.

### RELATED ART DOCUMENT

### PATENT DOCUMENT

[PATENT DOCUMENT 1] JPS58-1736A

### SUMMARY OF THE INVENTION

### PROBLEMS TO BE SOLVED BY THE INVENTION

As resin compositions for large molded articles such as automobile parts (e.g., bumpers, dashboards, and instrument panels) and industrial parts (e.g., pallets and storage containers), resin compositions that are capable of imparting excellent mechanical strength to molded articles and have excellent dimensional stability during molding are required. However, the resin composition proposed in Patent Document 1 is not always satisfactory in terms of dimensional stability during molding, and further improvement is required at present.

Therefore, an objective of the present invention is to provide a resin composition that is capable of imparting excellent mechanical strength to a molded article and has excellent dimensional stability during molding, a molded article thereof, and a method for producing the resin composition.

### MEANS FOR SOLVING THE PROBLEMS

As a result of intensive studies to solve the above problems, the present inventors found that in a resin composition containing a polyolefin-based resin and a nucleating agent, the degree to which the nucleating agent accelerates the crystallization rate of the polyolefin-based resin influences dimensional stability during molding. The present inventors further found that specific parameters obtained from the results of thermal analysis or dynamic viscoelasticity measurement are measures for promoting the crystallization rate. Based on such findings, the present inventor further studied, and as a result, found that the above-described problems can be solved with a resin composition that allows the parameters to be within specific numerical ranges. This has led to the completion of the present invention.

In other words, the resin composition of the present invention is a resin composition containing a polyolefin-based resin and a nucleating agent, which is characterized in that a ratio t2/t1 between

an isothermal crystallization time t2 at 135°C of the resin composition and
an isothermal crystallization time t1 at 135°C of a nucleating agent-free resin composition having the same formulation as the resin composition except that the nucleating agent is not contained is 0.45 or more.

In other words, another resin composition of the present invention is a resin composition containing a polyolefin-based resin and a nucleating agent, which is characterized in that a ratio T2/T1 between

a time period T2 until a storage modulus curve and a loss modulus curve intersect with each other from the start of measurement when dynamic viscoelasticity measurement is carried out for the resin composition by a method specified in ISO-6721-10 at a measurement temperature of 150°C and a measurement frequency of 0.1 Hz and
a time period T1 until a storage modulus curve and a loss modulus curve intersect with each other from the start of measurement when dynamic viscoelasticity measurement is carried out for the nucleating agent-free resin composition having the same formulation as the resin composition except that the nucleating agent is not contained by a method specified in ISO-6721-10 at a measurement temperature of 150°C and a measurement frequency of 0.1 Hz is 0.35 or more.

For the resin composition of the present invention and another resin composition of the present invention, it is preferable that the nucleating agent be a composition represented by the following general formula (1):

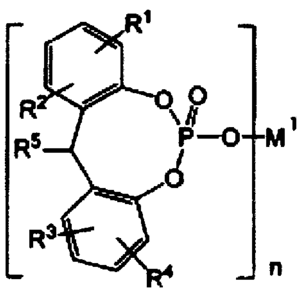

(1)

(in the general formula (1), $R^1$ to $R^5$ each independently denote a hydrogen atom or a linear or branched alkyl group having 1 to 6 carbon atoms, n denotes 1 or 2, $M^1$ denotes a hydrogen atom, an alkali metal, or dihydroxyaluminum when n is 1, and $M^1$ denotes an alkali earth metal, zinc, or hydroxyaluminum when n is 2). Further, for the resin composition of the present invention and another resin composition of the present invention, it is preferable that the polyolefin-based resin contain an elastomer. Further, it is preferable that the resin composition of the present invention and another resin composition of the present invention further contain a filler.

The molded article of the present invention is characterized in that it is obtained by molding the resin composition of the present invention and another resin composition of the present invention.

Further, the method for producing a resin composition of the present invention is a method for producing a resin composition containing a polyolefin-based resin and a nucleating agent, which is characterized in that a ratio t2/t1 between

an isothermal crystallization time t2 at 135°C of the resin composition and
an isothermal crystallization time t1 at 135°C of a nucleating agent-free resin composition having the same formulation as the resin composition except that the nucleating agent is not contained is 0.45 or more.

Furthermore, the method for producing another resin composition of the present invention is a method for producing a resin composition containing a polyolefin-based resin and a nucleating agent, which is characterized in that a ratio T2/T1 between

a time period T2 until a storage modulus curve and a loss modulus curve intersect with each other from the start of measurement when dynamic viscoelasticity measurement is carried out for the resin composition by a method specified in ISO-6721-10 at a measurement temperature of 150°C and a measurement frequency of 0.1 Hzand
a time period T1 until a storage modulus curve and a loss modulus curve intersect with each other from the start of measurement when dynamic viscoelasticity measurement is carried out for the nucleating agent-free resin composition having the same formulation as the resin composition except that the nucleating agent is not contained by a method specified in ISO-6721-10 at a measurement temperature of 150°C and a measurement frequency of 0.1 Hz is 0.35 or more.

EFFECTS OF THE INVENTION

According to the present invention, a resin composition that is capable of imparting excellent mechanical strength to a molded article and has excellent dimensional stability during molding, a molded article thereof, and a method for producing the resin composition can be provided.

MODE FOR CARRYING OUT THE INVENTION

Hereinafter, embodiments of the present invention will be described in detail.

<Resin Composition>

First, the resin composition of the present invention will be described. The resin composition of the present invention contains a polyolefin-based resin and a nucleating agent. The ratio t2/t1 between the isothermal crystallization time t2 at 135°C of the resin composition and the isothermal crystallization time t1 at 135°C of a nucleating agent-free resin composition having the same formulation as the resin composition except that the nucleating agent is not contained is 0.45 or more. In other words, for the resin composition of the present invention, t2/t1 is 0.45 or more when t2 is an isothermal crystallization time at 135°C of the resin composition and t1 is an isothermal crystallization time at 135°C of a nucleating agent-free resin composition having the same formulation as the resin composition of the present invention except that the nucleating agent is not contained .

By satisfying the conditions described above, the resin composition of the present invention is capable of imparting excellent mechanical strength to a molded article and has excellent dimensional stability during molding.

Here, the isothermal crystallization time at 135°C is determined by isothermal crystallization measurement using a differential scanning calorimeter (DSC). Specifically, the isothermal crystallization time is determined to be a time period until an exothermic peak top appears from the time point of achieving a temperature of 135°C when carrying out a measurement during which a sample is heated to a temperature higher than the melting point so as to be completely melted, and then rapidly cooled to 135°C and maintained at 135°C after the temperature reaches 135°C.

Due to the crystallization-promoting effect of the nucleating agent, t2 becomes shorter than t1. The value of t2/t1 is a measure of the degree to which the crystallization rate is promoted by the nucleating agent. Note that t2/t1 is less than 1.

The value of t2/t1 for the resin composition containing the polyolefin-based resin and the nucleating agent is determined based on type of a polyolefin-based resin, types of a nucleating agent and other components contained in the resin composition, the content ratios of these components in the polyolefin-based resin, and the dispersion states of these components in the resin composition. Further, the dispersion state of the components in the resin composition are determined based on properties of the polyolefin-based resin as a granular material, and, physical properties (e.g., properties and specific gravity of the granular material) and chemical properties of the components, the method for producing the resin composition (e.g., production conditions, in particular, a method of mixing the polyolefin-based resin, a nucleating agent, and other components contained in the resin composition), and the like. In consideration of these conditions, the resin composition of the present invention can be obtained by appropriately adjusting the conditions.

Specifically, t1 and t2 for the resin composition of the present invention can be adjusted by appropriately designing production conditions and blending. For example, when the amount of the nucleating agent added to the polyolefin-based resin is increased, t2/t1 decreases because the nucleating effect of the nucleating agent increases. In addition, when the particle size of the polyolefin-based resin is decreased, t2/t1 decreases because the nucleating agent is more evenly dispersed in the resin composition. In addition to the above, when the polyolefin-based resin and the nucleating agent are sufficiently mixed, t2/t1 decreases because the nucleating agent is more evenly dispersed in the resin composition. The resin composition of the present invention can be a resin composition that is capable of imparting excellent mechanical strength to a molded article and has excellent dimensional stability during molding by setting t2/t1 within a specific range based on the above principles.

As described above, the value of t2/t1 for the resin composition is 0.45 or more. When the value of t2/t1 is less than 0.45, the dimensional stability of the resin composition during molding is insufficient. From the viewpoint of achieving further excellent dimensional stability during molding, the value of t2/t1 is preferably 0.5 or more and more preferably 0.7 or more. The upper limit of the value of t2/t1 is preferably 0.9 or less and more preferably 0.8 or less.

Next, another resin composition of the present invention will be described. Another resin composition of the present invention contains a polyolefin-based resin and a nucleating agent. The ratio T2/T1 between the time period T2 until a storage modulus curve and a loss modulus curve intersect with each other from the start of measurement when dynamic viscoelasticity measurement is carried out for the resin composition by a method specified in ISO-6721-10 at a measurement temperature of 150°C and a measurement frequency of 0.1 Hz and the time period T1 until a storage modulus curve and a loss modulus curve intersect with each other from the start of measurement when dynamic viscoelasticity measurement is carried out for the nucleating agent-free resin composition having the same formulation as the resin composition except that the nucleating agent is not contained by a method specified in ISO-6721-10 at a measurement temperature of 150°C and a measurement frequency of 0.1 Hz is 0.35 or more. In other words, for another resin composition of the present invention, T2/T1 is 0.35 or more when T2 is a time period until a storage modulus curve and a loss modulus curve intersect with each other from the start of measurement when dynamic viscoelasticity measurement is carried out for the resin composition by a method specified in ISO-6721-10 under conditions of a measurement

temperature of 150°C and a measurement frequency of 0.1 Hz and T1 is a time period until a storage modulus curve and a loss modulus curve intersect with each other from the start of measurement when dynamic viscoelasticity measurement is carried out for the nucleating agent-free resin composition having the same formulation as another resin composition of the present invention except that the nucleating agent is not contained under the same conditions.

By satisfying the conditions described above, another resin composition of the present invention is capable of imparting excellent mechanical strength to a molded article and has excellent dimensional stability during molding.

Dynamic viscoelasticity measurement at a measurement temperature 150°C and a measurement frequency 0.1 Hz is carried out in such a manner that a sample is heated to a temperature higher than the melting point so as to be completely melted, and then cooled to 150°C and maintained at 150°C after the temperature reaches 150°C. Note that in this measurement, the time point of reaching 150°C is designated as the time point of the start of measurement.

As the sample is in a melted state immediately after the start of measurement, the contribution of the loss modulus (viscous component) to the dynamic complex modulus is greater than the contribution of the storage modulus (elastic component). As the crystallization of the resin composition proceeds, the contribution of the storage modulus (elastic component) gradually increases, and thus, at a point where the storage modulus curve and the loss modulus curve intersect with each other, the contribution rate of loss modulus (viscous component) and the contribution rate of storage modulus (elastic component) are reversed.

In this measurement, a time period until a storage modulus curve and a loss modulus curve intersect with each other from the start of measurement is an index of the crystallization of a sample obtained from the different viewpoint of the isothermal crystallization time described above.

Due to the crystallization-promoting effect of the nucleating agent, T2 becomes shorter than T1. Thus, as with t2/t1 described above, the value of T2/T1 is a measure of the degree to which the crystallization rate is promoted by the nucleating agent, and is obtained from a viewpoint different from t2/t1. Note that T2/T1 is less than 1.

The value of T2/T1 for the resin composition containing the polyolefin-based resin and the nucleating agent is determined based on the type of a polyolefin-based resin, types of a nucleating agent and other components contained in the resin composition, the content ratios of these components in the polyolefin-based resin, and the dispersion states of these components in the resin composition, as with the value of t2/t1 described above. Further, the dispersion states of the components in the resin composition are determined based on the properties of the polyolefin-based resin as a granular material, and, physical properties (e.g., properties and specific gravity of the granular material) and chemical properties of the components, the method for producing the resin composition (e.g., production conditions, in particular, a method of mixing the polyolefin-based resin, a nucleating agent, and other components contained in the resin composition), and the like. In consideration of these conditions, another resin composition of the present invention can be obtained by appropriately adjusting the conditions.

Specifically, T1 and T2 for another resin composition of the present invention can be adjusted by appropriately designing production conditions and blending. For example, when the amount of the nucleating agent added to the polyolefin-based resin is increased, T2/T1 decreases because the nucleating effect of the nucleating agent increases. In addition, when the particle size of the polyolefin-based resin is decreased, T2/T1 decreases because the nucleating agent is more evenly dispersed in the resin composition. In addition to the above, when the polyolefin-based resin and the nucleating agent are sufficiently mixed, T2/T1 decreases because the nucleating agent is more evenly dispersed in the resin composition. Another resin composition of the present invention can be a resin composition that is capable of imparting excellent mechanical strength to a molded article and has excellent dimensional stability during molding by setting T2/T1 within a specific range based on the above principles.

As described above, the value of T2/T1 for another resin composition of the present invention is 0.35 or more. When the value of T2/T1 is less than 0.35, the dimensional stability of the resin composition during molding is insufficient. From the viewpoint of achieving further excellent dimensional stability during molding, the value of T2/T1 is preferably 0.4 or more and more preferably 0.6 or more. the upper limit of the value of T2/T1 is preferably 0.9 or less and more preferably 0.8 or less.

<Polyolefin-based Resin>

Examples of a polyolefin-based resin according to the resin composition of the present invention and another resin composition of the present invention include: $\alpha$-olefin polymers such as low-density polyethylene (LDPE), linear low-density polyethylene (L-LDPE), high-density polyethylene (HDPE), isotactic polypropylene, syndiotactic polypropylene, hemiisotactic polypropylene, cycloolefin polymer, stereo block polypropylene, poly-3-methyl-1-butene, poly-3-methyl-1-pentene, and poly-4-methyl-1-pentene; and $\alpha$-olefin copolymers such as ethylene/propylene block or random copolymer, impact copolymer polypropylene, ethylene-methylmethacrylate copolymer, ethylene-methylacrylate copolymer, ethylene-ethylacrylate copolymer, ethylene-butylacrylate copolymer, ethylene-vinyl acetate copolymer, and ethylene-vinyl alcohol resin (EVOH). The polyolefin-based resin may be a blend of two or more thereof, a block polymer forming a block copolymer, a resin alloy, or a chlorinated product thereof.

For the resin composition of the present invention and another resin composition of the present invention, it is preferable that the polyolefin-based resin include a polypropylene-based resin. Examples of a polypropylene-based resin include isotactic polypropylene, syndiotactic polypropylene, hemiisotactic polypropylene, stereo block polypropylene, ethylene/propylene block or random copolymer, and impact copolymer polypropylene (ICP). Of these, impact copolymer polypropylene is particularly preferable from a viewpoint of imparting excellent impact resistance to a molded article.

For the resin composition of the present invention and another resin composition of the present invention, it is preferable that the polyolefin-based resin includes an elastomer. In this case, the resin composition can impart excellent impact resistance to a molded article.

Examples of the above-described elastomer include a thermoplastic elastomer composed of hard segments consisting of a polyolefin-based resin and soft segments consisting of a rubber component. The thermoplastic elastomer may be one in which soft segments are crosslinked by a method such as dynamic cross-linking.

Examples of a polyolefin-based resin that constitutes hard segments include polypropylene homopolymer, polypropylene block copolymer, and polypropylene random copolymer. The hard segments may contain two or more thereof.

Examples of a rubber component that constitutes soft segments include: ethylene-$\alpha$-olefin copolymers such as ethylene-propylene copolymer (EPM), ethylene-1-hexene copolymer, and ethylene-1-octene copolymer; and vinyl acetate homopolymers such as ethylene-propylene-diene copolymer (EPDM and, ethylene-vinyl acetate copolymer (EVA). Of these, ethylene-$\alpha$-olefin copolymer is particularly preferable. In addition, as the ethylene-$\alpha$-olefin copolymer, ethylene-1-octene copolymer is particularly preferable. The soft segments may contain two or more thereof.

The content of the elastomer is preferably from 1% to 50% by mass of the total polyolefin-based resin. In this case, the resin composition can impart further excellent impact resistance to a molded article and the impact resistance of the molded article in a low-temperature environment becomes excellent. The content of the elastomer is more preferably 3% by mass or more and particularly preferably 5% by mass or more of the total polyolefin-based resin. Further, the content of the elastomer is still more preferably 40% by mass or less and particularly preferably 30% by mass or less of the total polyolefin-based resin.

A polyolefin-based resin according to the resin composition of the present invention and another resin composition of the present invention is produced by appropriately selecting a Ziegler catalyst, a Ziegler-Natta catalyst, a metallocene catalyst, and other various polymerization catalysts, including a cocatalyst, a catalyst carrier, and a chain transfer agent, as well as, various polymerization conditions such as temperature, pressure, concentration, flow rate, and removal of catalyst residues in various polymerization methods such as gas phase polymerization, solution polymerization, emulsion polymerization, and bulk polymerization, by which a resin having physical characteristics suitable for packaging materials is obtained or a resin having physical characteristics suitable for molding of packaging materials is obtained. For the polyolefin-based resin, the number average molecular weight, weight average molecular weight, molecular weight distribution, melt flow rate, melting point, melting peak temperature, tacticity such as isotactic or syndiotactic property, presence/absence and degree of branching, specific gravity, proportions of dissolved components in various solvents, haze, gloss, impact strength, flexural modulus, Olsen rigidity, and other characteristics and whether or not each characteristic value satisfies a particular formula can be appropriately selected according to the desired characteristics.

<Nucleating Agent>

Examples of a nucleating agent contained in the resin composition of the present invention and another resin composition of the present invention include, but are not particularly limited to, a carboxylic acid metal salt, an aromatic phosphate metal salt, an amide compound, and a sorbitol compound. The nucleating agent may be a combination of two or more thereof.

Examples of a carboxylic acid metal salt include sodium benzoate, *4-tert*-butylbenzoate aluminum salt, sodium adipate, disodium bicyclo[2.2.1]heptane-2,3-dicarboxylate, and calcium cyclohexane dicarboxylate. The carboxylic acid metal salt may be a combination of two or more thereof.

Example of an aromatic phosphate metal salt include a compound represented by the following general formula (1).

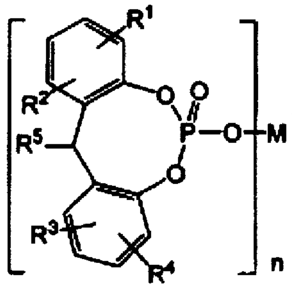

(1)

In the general formula (1), $R^1$ to $R^5$ each independently denote a hydrogen atom or a linear or branched alkyl group having 1 to 6 carbon atoms, n denotes 1 or 2, $M^1$ denotes a hydrogen atom, an alkali metal, or dihydroxyaluminum when n is 1, and $M^1$ denotes an alkali earth metal, zinc, or hydroxyaluminum when n is 2.

Examples of a linear or branched alkyl group having 1 to 6 carbon atoms include methyl group, ethyl group, propyl group, isopropyl group, butyl group, sec-butyl group, *tert*-butyl group, isobutyl group, amyl group, isoamyl group, *tert*-amyl group, hexyl group, 2-hexyl group, and 3-hexyl group. Of these, isopropyl group, tert-butyl group, and *tert*-amyl group are preferable, and tert-butyl group is particularly preferable.

Examples of an alkali metal include lithium, sodium, and potassium.

Examples of an alkali earth metal include magnesium and calcium.

$M^1$ is preferably at least one selected from the group consisting of lithium, sodium, dihydroxyaluminum and hydroxyaluminum, and is more preferably at least one selected from the group consisting of lithium, sodium, and hydroxyaluminum.

Specific examples of compounds represented by the general formula (1) include compounds P-1 to P-6 having the following structure. The compound represented by the general formula (1) may be a combination of two or more thereof.

P-1

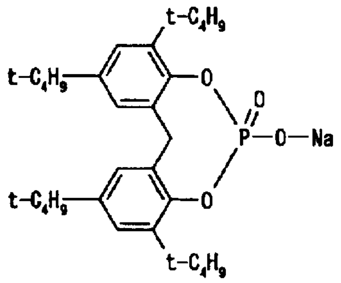

P-4

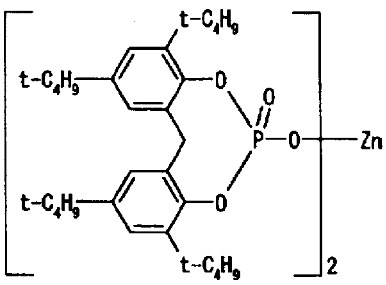

P-2

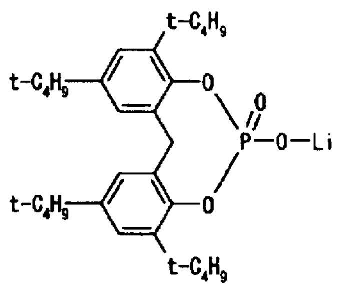

P-5

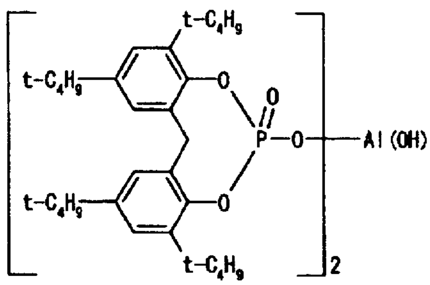

P-3 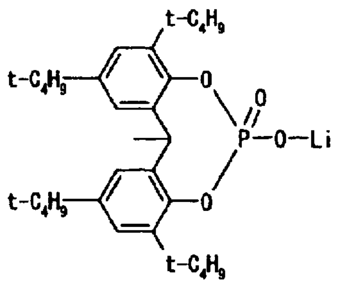 P-6 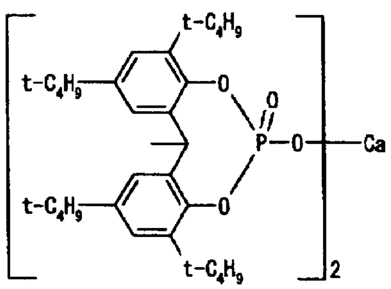

Examples of an amide compound include N,N',N"-tris[2-methylcyclohexyl]-1,2,3-propanetricarboxamide, N,N',N"-tricyclohexyl-1,3,5-benzenetricarboxamide, N,N'-dicyclohexylnaphthalenedicarboxamide, and 1,3,5-tri(2,2-dimethylpropanamide)benzene. The amide compound may be a combination of two or more thereof.

Examples of a sorbitol compound include dibenzylidene sorbitol, bis(methylbenzylidene)sorbitol, bis(3,4-dimethylbenzylidene)sorbitol, bis(p-ethylbenzylidene)sorbitol, and bis(dimethylbenzylidene)sorbitol. The sorbitol compound may be a combination of two or more thereof.

A nucleating agent contained in the resin composition of the present invention and another resin composition of the present invention is particularly preferably a compound represented by the general formula (1). In this case, the resin composition of the present invention and another resin composition of the present invention can impart significantly excellent mechanical strength to a molded article.

The content of the nucleating agent is preferably from 0.005 to 1 part by mass with respect to 100 parts by mass of the polyolefin-based resin. In this case, the resin composition of the present invention and another resin composition of the present invention can impart further excellent mechanical strength to a molded article, and the extraction of the nucleating agent from the molded article can be sufficiently suppressed. The content of the nucleating agent is more preferably 0.01 parts by mass or more and particularly preferably 0.05 parts by mass or more with respect to 100 parts by mass of the polyolefin-based resin. Further, the content of the nucleating agent is still more preferably 0.5 parts by mass or less, yet more preferably 0.25 parts by mass or less, and particularly preferably 0.2 parts by mass or less with respect to 100 parts by mass of the polyolefin-based resin.

It is preferable that the resin composition of the present invention and another resin composition of the present invention further contain a filler. In this case, the resin composition of the present invention and another resin composition of the present invention can impart further excellent mechanical strength to a molded article.

Examples of a filler can include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, silica, alumina, potassium titanate whisker, wollastonite, and fibrous magnesium oxysulfate. Of these, talc is particularly preferable because it can impart significantly excellent mechanical strength to a molded article and is easily available. For the filler that can be used, the particle size (fiber diameter, fiber length, and aspect ratio in the case of fibrous material) can be appropriately selected, and a surface-treated filler can be optionally used. From the viewpoint of making the mechanical strength and impact resistance of a molded article excellent, the content of the filler is preferably from 0.01 to 80 parts by mass with respect to 100 parts by mass of the polyolefin-based resin. The content of the filler is more preferably 1 part by mass or more with respect to 100 parts by mass of the polyolefin-based resin. In this case, a molded article has significantly excellent mechanical strength. Further, the content of the filler is still more preferably 50 parts by mass or less with respect to 100 parts by mass of the polyolefin-based resin. In this case, a molded article has significantly excellent impact resistance.

The resin composition of the present invention and another resin composition of the present invention may further contain additives such as phenol-based antioxidants, phosphorus-based antioxidants, sulfur-based antioxidants, other antioxidants, hindered amine compounds, ultraviolet absorbers, flame retardant agents, flame retardant aids, lubricants, hydrotalcites, fatty acid metal salts, antistatic agents, fluorescent brighteners, pigments, and dyes unless the performance is significantly impaired.

Examples of a phenol-based antioxidant include: 2,6-di-*tert*-butyl-4-ethylphenol, 2-*tert*-butyl-4,6-dimethylphenol, styrenated phenol, 2,2'-methylene bis(4-ethyl-6-*tert*butylphenol), 2,2'-thiobis-(6-*tert*-butyl-4-methylphenol), 2,2'-thiodiethylene bis[3-(3,5-di-*tert*-butyl-4-hydroxyphenyl)propionate], 2-methyl-4,6-bis(octylsulfanylmethyl)phenol, 2,2'-isobutylidene bis(4,6-dimethylphenol), isooctyl-3-(3,5-di-*tert*-butyl -4-hydroxyphenyl)propionate, N,N'-hexane-1,6-diyl bis[3-(3,5-di-*tert*-butyl-4-hydroxyphenyl)propionamide], 2,2'-oxamide-bis[ethyl-3-(3,5-di-*tert*-butyl-4-hydroxyphenyl)propionate], 2-ethylhexyl-3-(3',5'-di-*tert*-butyl-4'-hydroxyphenyl)propionate, 2,2'-ethylene bis(4,6-di-*tert*-butylphenol), 3,5-di-*tert*-butyl-4-hydroxybenzene propanoic acid and C13-15 alkyl ester, 2,5-di-*tert*-amylhydroquinone, a polymer substance of hindered phenol (trade name: AO.OH.98 manufactured by ADEKA POLYMER ADDITIVES EUROPE SAS), 2,2'-methylene bis[6-(1-methylcyclohexyl)-p-cresol], 2-*tert*-butyl-6-(3-*tert*-butyl-2-hydroxy5-methylbenzyl)-4-methylphenylacrylate, 2-[1-(2-hydroxy-3,5-di-*tert*-pentylphenyl)ethyl]-4,6-di-*tert*-pentylphenylacrylate, 6-[3-(3-*tert*-butyl-4-hydroxy-5-methyl)propoxy]-2,4,8,10-tetra-*tert*-butylbenz[d,f][1,3,2]-dioxaphosphobine, hexamethylene bis[3-(3,5-di-*tert*-butyl-4-hydroxyphenyl)propionate], bis[monoethyl(3,5-di-*tert*-butyl-4-hydroxybenzyl)phosphonate]calcium salt, a reaction product of 5,7-bis(1,1-dimethylethyl)-3-hydroxy-2(3H)-benzofuranone and o-xylene, 2,6-di-*tert*-butyl-4-(4,6-bis(octylthio)-1,3,5-triazine-2-ylamino)phenol, DL-α-tocopherol (vitamin E), 2,6-bis(α-methylbenzyl)-4-methylphenol, bis[3,3-bis-(4'-hydroxy-3'-*tert*-butyl-phenyl)butanoic acid]glycol ester, 2,6-di-*tert*-butyl-p-cresol, 2,6-diphenyl-4-octadecyloxyphenol, stearyl(3,5-di-*tert*-butyl-4-hydroxyphenyl)propionate, distearyl(3,5-di-*tert*-butyl-4-hydroxybenzyl)phosphonate, tridecyl-3,5-*tert*-butyl-4-hydroxybenzyl thioacetate, thiodiethylene bis[(3,5-di-*tert*-butyl-4-hydroxyphenyl)propionate], 4,4'-thiobis(6-*tert*-butyl-m-cresol), 2-octylthio-4,6-di(3,5-di-*tert*-butyl-4-hydroxyphenoxy)-s-triazine, 2,2'-methylene bis(4-methyl-6-*tert*-butylphenol), bis[3,3-bis(4-hydroxy-3-*tert*-butylphenyl)butyric acid]glycol ester, 4,4'-butylidene bis(2,6-di-*tert*butylphenol), 4,4'-butylidene bis(6-*tert*-butyl-3-methylphenol), 2,2'-ethylidene bis(4,6-di-tertbutylphenol), 1,1,3-tris(2-methyl-4-hydroxy-5-*tert*-butylphenyl)butane, bis[2-*tert*-butyl-4-methyl-6-(2-hydroxy-3-*tert*-butyl-5-methylbenzyl)phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3,5-*tert*-butyl-4-hydroxyphenyl)propionate]methane, 2-*tert*-butyl-4-methyl-6-(2-acryloyloxy-3-*tert*-butyl-5-methylbenzyl)phenol, 3,9-bis[2-(3-*tert*-butyl-4-hydroxy-5-methylhydrocinnamoyloxy)-1,1-dimethylethyl]-2,4,8,10-tetraoxaspiro[5.5]undecane, and triethylene glycol bis[β-(3-*tert*-butyl-4-hydroxy-5-methylphenyl)propionate, and 3-(3,5-dialkyl-4-hydroxyphenyl)propionic acid derivatives such as stearyl-3-(3,5-di-*tert*-butyl-4-hydroxyphenyl)propionic acid amide, palmityl-3-(3,5-di-*tert*-butyl-4-hydroxyphenyl)propionic acid amide, myristyl-3-(3,5-di-*tert*-butyl-4-hydroxyphenyl)propionic acid amide, and lauryl-3-(3,5-di-*tert*-butyl-4-hydroxyphenyl)propionic acid amide. When a phenol-based antioxidant is contained, the content thereof may be from 0.001 to 5 parts by mass and is preferably from 0.01 to 3 parts by mass with respect to 100 parts by mass of the polyolefin-based resin.

Examples of a phosphorus-based antioxidant include triphenyl phosphite, diisooctyl phosphite, heptakis(dipropylene glycol)triphosphite, triisodecyl phosphite, diphenylisooctyl phosphite, diisooctylphenyl phosphite, diphenyltridecyl phosphite, triisooctyl phosphite, trilauryl phosphite, diphenyl phosphite, tris(dipropylene glycol)phosphite, dioleylhydrogen phosphite, trilauryl trithiophosphite, bis(tridecyl)phosphite, tris(isodecyl)phosphite, tris(tridecyl)phosphite, diphenyldecylphosphite, dinonylphenyl bis(nonylphenyl)phosphite, poly(dipropylene glycol)phenylphosphite, tetraphenyl dipropyl glycol diphosphite, tris(nonylphenyl)phosphite, tris(2,4-di-*tert*-butylphenyl)phosphite, tris(2,4-di-*tert*-butyl-5-methylphenyl)phosphite, tris[2-*tert*-butyl-4-(3-*tert*-butyl-4-hydroxy-5-methylphenylthio)-5-methylphenyl]phosphite, tridecylphosphite, octyl diphenylphosphite, di(decyl)monophenyl phosphite, a mixture of distearyl pentaerythritol diphosphite and a calcium stearate salt, alkyl (C10) bisphenol A phosphite, tetraphenyl-tetra(tridecyl)pentaerythritol tetraphosphite, bis(2,4-di-*tert*-butyl-6-methylphenyl)ethylphosphite, tetra(tridecyl)isopropylidenediphenol diphosphite, tetra(tridecyl)-4,4'-n-butylidene bis(2-*tert*-butyl-5-methylphenol)diphosphite, hexa(tridecyl)-1,1,3-tris(2-methyl-4-hydroxy-5-*tert*-butylphenyl)butanetriphosphite, tetrakis(2,4-di-*tert*-butylphenyl)biphenylene diphosphonite, 9,10-dihydro-9-oxa-10-phosphaphenanthrene-10-oxide, (1-methyl-1-propenyl-3 -ylidene)tris(1,1-dimethylethyl)-5-methyl-4,1-phenylene)hexa(tridecyl)phosphite, 2,2'-methylene bis(4,6-di-*tert*-butylphenyl)-2-ethylhexylphosphite, 2,2'-methylene bis(4,6-di-*tert*-butylphenyl)octadecylphosphite, 2,2'-ethylidene bis(4,6-di-*tert*-butylphenyl)fluorophosphite, 4,4'-butylidene bis(3-methyl-6-*tert*-butylphenylditridecyl)phosphite, tris(2-[(2,4,8,10-tetrakis-*tert*-butyldibenzo[d,f][1,3,2]dioxaphosphepine-6-yl)oxy]ethyl)amine, 3,9-bis(4-nonylphenoxy)-2,4,8,10-tetraoxa-3,9-diphosphaspiro[5,5]undecane, 2,4,6-tri-*tert*-butylphenyl-2-butyl-2-ethyl-1,3-propanediol phosphite, poly 4,4'-isopropylidenediphenol C12-15 alcohol phosphite, bis(diisodecyl)pentaerythritol diphosphite, bis(tridecyl)pentaerythritol diphosphite, bis(octadecyl)pentaerythritol diphosphite, bis(nonylphenyl)pentaerythritol diphosphite, bis(2,4-di-*tert*-butylphenyl)pentaerythritol diphosphite, bis(2,4,6-tri-*tert*-butylphenyl)pentaerythritol diphosphite, bis(2,6-di-*tert*-butyl-4-methylphenyl)pentaerythritol diphosphite, and bis(2,4-dicumylphenyl)pentaerythritol diphosphite. When a phosphorus-based antioxidant is contained, the content thereof may be from 0.001 to 10 parts by mass and is preferably from 0.01 to 0.5 parts by mass with respect to 100 parts by mass of the polyolefin-based resin.

Examples of a sulfur-based antioxidant include tetrakis[methylene-3-(laurylthio)propionate]methane, bis(methyl-4-[3-n-alkyl (C12/C14) thiopropionyloxy]5-*tert*-butylphenyl)sulfide, ditridecyl-3,3'-thiodipropionate, dilauryl-3,3'-thiodipropionate, dimyristyl-3,3'-thiodipropionate, distearyl-3,3'-thiojipropionate, lauryl/stearyl thiodipropionate, 4,4'-thiobis(6-*tert*-butyl-m-cresol), 2,2'-thiobis(6-*tert*-butyl-p-cresol), and distearyl-disulfide. When a sulfur-based antioxidant is contained, the content thereof may be from 0.001 to 10 parts by mass and is preferably from 0.01 to 0.5 parts by mass with respect to 100 parts by mass of the polyolefin-based resin.

Examples of another antioxidant include: nitrone compounds such as N-benzyl-α-phenylnitrone, N-ethyl-α-methylnitrone, N-octyl-α-heptylnitrone, N-lauryl-α-undecylnitrone, N-tetradecyl-α-tridecylnitrone, N-hexadecyl-α-pentadecylnitrone, N-octyl-α-heptadecylnitrone, N-hexadecyl-α-heptadecylnitrone, N-octadecyl-α-pentadecylnitrone, N-heptadecyl-α-heptadecylnitrone, and N-octadecyl-α-heptadecylnitrone; and benzofuran compounds such as 3-arylbenzofuran-2(3H)-one, 3-(alkoxyphenyl)benzofuran-2-one, 3-(acyloxyphenyl)benzofuran-2(3H)-one, 5,7-di-*tert*-butyl-3-(3,4-dimethylphenyl)-benzofuran-2(3H)-one, 5,7-di-*tert*-butyl-3-(4-hydroxyphenyl)-benzofuran-2(3H)-one, 5,7-di-*tert*-butyl-3-{4-(2-hydroxyethoxy)phenyl}-benzofuran-2(3H)-one, 6-(2-(4-(5,7-di-*tert*-2-oxo-2,3-dihydrobenzofuran-3-yl)phenoxy)ethoxy)-6-oxohexyl-6-((6-hydroxyhexanoyl)oxy)hexanoate, and 5-di-*tert*-butyl-3-(4-((15-hydroxy-3,6,9,13-tetraoxapentadecyl)oxy)phenyl)benzofuran-2(3H)one. When another antioxidant is contained, the content thereof may be from 0.001 to 20 parts by mass and is preferably from 0.01 to 5 parts by mass with respect to 100 parts by mass of the polyolefin-based resin.

Examples of an ultraviolet absorber include: 2-hydroxybenzophenones such as 2,4-dihydroxybenzophenone and 5,5'-methylene bis(2-hydroxy-4-methoxybenzophenone); 2-(2-hydroxyphenyl)benzotriazoles such as 2-(2-hydroxy-5-methylphenyl)benzotriazole, 2-(2-hydroxy-5-*tert*-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3,5-dicumylphenyl)benzotriazole, 2,2'-methylene bis(4-*tert*-octyl-6-benzotriazolyl phenol), polyethylene glycol ester of 2-(2-hydroxy-3-*tert*-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-*tert*-butylphenyl]benzotriazole, 2-[2-hydroxy-3-(2-methacryloyloxyethyl)-5-*tert*-octylphenyl]benzotriazole, 2-[2-hydroxy-3-(2-methacryloyloxyethyl)-5-*tert*-butylphenyl]-5-chlorobenzotriazole, 2-[2-hydroxy-5-(2-methacryloyloxyethyl)phenyl]benzotriazole, 2-[2-hydroxy-3-*tert*-butyl-5-(2-methacryloyloxyethyl)phenyl]benzotriazole, 2-[2-hydroxy-3-*tert*-amyl-5-(2-methacryloyloxyethyl)phenyl]benzotriazole, 2-[2-hydroxy-3-*tert*-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; benzoates such as phenyl salicylate, resorcinol monobenzoate, 2,4-di-*tert*-butylphenyl-3,5-di-*tert*-butyl-4-hydroxybenzoate, octyl(3,5-di-*tert*-butyl-4-hydroxy)benzoate, dodecyl(3,5-di-*tert*-butyl-4-hydroxy)benzoate, tetradecyl(3,5-di-*tert*-butyl-4-hydroxy)benzoate, hexadecyl(3,5-di-*tert*-butyl-4-hydroxy)benzoate, octadecyl(3,5-di-*tert*-butyl-4-hydroxy)benzoate, and behenyl(3,5-di-*tert*-butyl-4-hydroxy)benzoate; substituted oxanilides such as 2-ethyl-2'-ethoxyoxanilide and 2-ethoxy-4'-dodecyloxanilide; cyano acrylates such as ethyl-$\alpha$-cyano-$\beta$,$\beta$-diphenyl acrylate, and methyl-2-cyano-3-methyl-3-(p-methoxyphenyl)acrylate; and triazines such as 2-(4,6-diphenyl-1,3,5-triazine-2-yl)-5-hexyloxyphenol, 2-(2-hydroxy-4-octoxyphenyl)-4,6-bis(2,4-dimethylphenyl)-1,3,5-triazine, trioctyl-2,2',2"-((1,3,5-triazine-2,4,6-triyl)tris(3-hydroxybenzene-4-,1-diyl)tripropionate), 2-(4,6-diphenyl-1,3,5-triazine-2-yl)-5-[2-(2-ethylhexanoyloxy)ethoxy]phenol, 2,4,6-tris(2-hydroxy-4-hexyloxy-3-methylphenyl)-1,3,5-triazine, and 1,12-bis[2-[4-(4,6-diphenyl-1,3,5-triazine-2-yl)-3-hydroxyphenoxy]ethyl]dodecanedioate; various metal salts or metallic chelates, in particular, salts of nickel and chrome, or chelates. When an ultraviolet absorber is contained, the content thereof may be from 0.001 to 20 parts by mass and is preferably from 0.01 to 10 parts by mass with respect to 100 parts by mass of the polyolefin-based resin.

Examples of a hindered amine compound include 2,2,6,6-tetramethyl-4-piperidylpiperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)di(tridecyl)-1,2,3,4-butanetetracarboxylate, bis(1,2,2,6,6-pentamethyl-4-piperidyl)·di(tridecyl)-1,2,3,4-butanetetracarboxylate, bis(1,2,2,4,4-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8-12-tetraazadodecane, 1,6,11-tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bis{4-(1-octyloxy-2,2,6,6-tetramethyl)piperidyl}decanedioate, and bis{4-(2,2,6,6-tetramethyl-1-undecyloxy)piperidyl}carbonate. When a hindered amine compound is contained, the content thereof may be from 0.001 to 20 parts by mass and is preferably from 0.01 to 10 parts by mass with respect to 100 parts by mass of the polyolefin-based resin.

Examples of flame retardant agents include: aromatic phosphates such as triphenyl phosphate, tricresyl phosphate, trixylenyl phosphate, cresyl diphenylphosphate, cresyl-2,6-dixylenyl phosphate, resorcinol bis(diphenylphosphate), (1-methylethylidene)-4,1-phenylene tetraphenyl diphosphate, 1,3-phenylene tetrakis(2,6-dimethylphenyl)phosphate, and "ADK STAB FP-500," "ADK STAB FP-600," and "ADK STAB FP-800" (trade names) manufactured by ADEKA CORPORATION; phosphonates such as divinyl phenylphosphonate, diallyl phenylphosphonate, and (1-butenil)phenylphosphonate; phosphinates such as diphenyl phenyl phosphinate, diphenyl methyl phosphinate, and 9,10-dihydro-9-oxa-10-phosphaphenanthrene-10- oxide derivatives; phosphazene compounds such as bis(2-allylphenoxy)phosphazene and dicresylphosphazene; phosphorus-based flame retardent agents such as melamine phosphate, melamine pyrophosphate, melamine polyphosphate, melam polyphosphate, ammonium polyphosphate, piperazine phosphate, piperazine pyrophosphate, piperazine polyphosphate, phosphorus-containing vinyl benzyl compounds, and red phosphorus; metal hydroxides such as magnesium hydroxide and aluminum hydroxide; bromine-based flame retardent agents such as brominated bisphenol type A epoxy resin, brominated phenol novolac-type epoxy resin, hexabromobenzene,

pentabromotoluene, ethylene bis(pentabromophenyl), ethylene bistetra bromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene and 2,4,6-tris(tribromophenoxy)-1,3,5-triazine, tribromophenyl maleimide, tribromophenyl acrylate, tribromophenyl methacrylate, tetrabromobisphenol type A dimethacrylate, pentabromobenzyl acrylate, and brominated styrene. It is preferable to use these flame retardant agents in combination with an anti-drip agent such as fluororesin and/or a flame retardant aid such as a polyalcohol or hydrotalcite. When a flame retardant agent is contained, the content thereof may be from 1 to 100 parts by mass and is from 10 to 70 parts by mass with respect to 100 parts by mass of the polyolefin-based resin.

The lubricant is added for the purpose of imparting smoothness to the surface of a molded body and enhancing the scratch-preventing effect. Examples of a lubricant include: unsaturated fatty acid amides such as oleic acid amide and erucic acid amide; saturated fatty acid amides such as behenic acid amide and stearic acid amide; butyl stearate, stearyl alcohol, monoglyceride stearate, sorbitan monopalmitate, sorbitan monostearate, mannitol, stearic acid, hardened castor oil, stearic acid amide, oleic acid amide, and ethylene bis(stearic acid amide). These may be used singly or two or more thereof may be used in combination. When a lubricant is contained, the content thereof may be from 0.01 to 2 parts by mass and is preferably from 0.03 to 0.5 parts by mass with respect to 100 parts by mass of the polyolefin-based resin.

As the fatty acid metal salt, a compound represented by the following general formula (2) is preferable from a viewpoint of heat resistance and the effect of dispersing a nucleating agent in a resin.

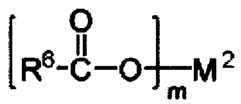
(2)

Here, in the general formula (2), $R^6$ denotes a linear or branched fatty acid residue having 12 to 20 carbon atoms, this fatty acid residue may be substituted with a hydroxy group, $M^2$ denotes a mono to trivalent metal atom, and the metal ion may be bound to a hydroxy group, and m denotes an integer of 1 to 3.

In the general formula (2), specific examples of $M^2$ include sodium, potassium, lithium, calcium, zinc, barium, magnesium, and hydroxyaluminum. sodium, potassium, and lithium are particularly preferable. When a fatty acid metal salt is contained, the content thereof may be from 0.005 to 5 parts by mass and is preferably from 0.01 to 0.5 parts by mass with respect to 100 parts by mass of the polyolefin-based resin.

Examples of the hydrotalcites include composite salt compounds consisting of magnesium, aluminum, a hydroxy group, a carbonate group, and arbitrary crystalline water known as natural and synthetic products, in which part of magnesium or aluminum is substituted with another metal such as an alkali metal or zinc or in which a hydroxyl group and/or a carbonic acid group are substituted with another anionic group. Specific examples thereof include hydrotalcites represented by the following general formula (3) in which the metals are substituted with alkali metals. In addition, compounds represented by the following general formula (4) can also be used as Al-Li-based hydrotalcites.

$$Mg_{x1}Zn_{x2}Al_2(OH)_{2(x1+x2)+4}(CO_3)pH_2O \qquad (3)$$

Here, in the general formula (3), x1 and x2 each denote a number that satisfies the conditions represented by the following expression, and p denotes 0 or a positive number: $0 \leq x2/x1<10, 2 \leq x1+x2 \leq 20$.

$$[Li_{1/3}Al_{2/3}(OH)_2] \cdot [A^{q-}{}_{1/3q} \cdot pH_2O] \qquad (4)$$

Here, in the general formula (4), $A^{q-}$ denotes a q-valent anion, and p denotes 0 or a positive number. In addition, some of the carbonate anions in hydrotalcites may be replaced with another anion.

The hydrotalcites may be those from which crystalline water is dehydrated or may be coated with a higher fatty acid such as stearic acid, a higher fatty acid metal salt such as an oleic acid alkali metal salt, an organic sulfonic acid metal salt such as a dodecylbenzene sulfonic acid alkali metal salt, higher fatty acid amide, higher fatty acid ester, wax, or the like.

The hydrotalcites may be natural products or synthetic products. Examples of a method for synthesizing hydrotalcites include known methods described in JP-S46-2280B (1971), JP-S50-30039B (1975), JP-S51-29129B (1976), JP-H3-36839B (1991), JP-S61-174270A (1986), JP-H5-179052A (1993), and the like. In addition, hydrotalcites can be used without being limited by their crystal structures, crystal particles, and the like. When a hydrotalcite is contained, the content thereof may be from 0.001 to 5 parts by mass and is preferably from 0.01 to 3 parts by mass with respect to 100 parts by mass of the polyolefin-based resin.

Examples of antistatic agents include low-molecular antistatic agents of nonionic, anionic, cationic or amphoteric surfactants and high-molecular antistatic agents of polymer compounds. Examples of nonionic surfactants include: polyethylene glycol-type nonionic surfactants such as higher alcohol ethylene oxide adduct, fatty acid ethylene oxide adduct, higher alkylamine ethylene oxide adduct, and polypropylene glycol ethylene oxide adduct; and polyalcohol type nonionic surfactants such as polyethylene oxide, fatty acid ester of glycerin, fatty acid ester of pentaerythritol, fatty acid ester of sorbitol or sorbitan, alkyl ether of polyalcohol, and aliphatic amide of alkanolamine. Examples of anionic surfactants include carboxylates such as alkali metal salts of higher fatty acids; sulfate ester salts such as higher alcohol sulfate ester salt and higher alkyl ether sulfate ester salt; sulfonates such as alkylbenzene sulfonate, alkyl sulfonate, and paraffin sulfonate; and phosphate salts such as higher alcohol phosphate salt. Examples of cationic surfactants include quaternary ammonium salts such as alkyltrimethyl ammonium salt. Examples of amphoteric surfactants include: amino acid-type amphoteric surfactants such as higher alkylaminopropionate salt; and betaine-type amphoteric surfactants such as higher alkyldimethyl betaine and higher alkyldihydroxyethyl betaine. Of these, anionic surfactants are preferable, and sulfonates such as alkylbenzene sulfonate, alkyl sulfonate, and paraffin sulfonate are particularly preferable. When a low-molecular antistatic agent is contained, the content thereof may be from 0.1 to 10 parts by mass and is preferably from 0.5 to 5 parts by mass with respect to 100 parts by mass of the polyolefin-based resin.

Examples of high-molecular antistatic agents include block polymers having an ionomer or polyethylene glycol as the hydrophilic moiety. Examples of an ionomer include an ionomer described in JP2010-132927A. Examples of polymers having polyethylene glycol as the hydrophilic moiety include polyether ester amide described in JP-H7-10989A (1995), a polymer consisting of polyolefin and polyethylene glycol described in U.S. Patent No. 6552131, a polymer consisting of polyester and polyethylene glycol described in JP2016-023254A. When a high-molecular antistatic agent is contained, the content thereof may be from 3 to 60 parts by mass and is preferably from 5 to 25 parts by mass and more preferably from 7 to 20 parts by mass with respect to 100 parts by mass of the polyolefin-based resin.

The fluorescent brightener is a compound that has the fluorescence action to absorb ultraviolet rays of sunlight or artificial light, convert them into visible light of purple to blue, and radiate them, thereby promoting the whiteness and bluish tint of a molded body. Examples of the fluorescent brightener include benzoxazole-based compounds such as C. I. Fluorescent Brightener 184; coumarin-based compounds such as C. I. Fluorescent Brightener 52; and diaminostilbene disulfonic acid-based compounds such as C. I. Fluorescent Brighteners 24, 85, and 71. When a fluorescent brightener is contained, the content thereof may be from 0.00001 to 0.1 parts by mass and is preferably from 0.00005 to 0.05 parts by mass with respect to 100 parts by mass of the polyolefin-based resin.

The pigment is not particularly limited, and for example, a commercially available pigment may be used. Examples of commercially available pigments include: Pigment Red 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; Pigment Orange 13, 31, 34, 36, 38, 43, 46, 48, 49, 51, 52, 55, 59, 60, 61, 62, 64, 65, and 71; Pigment Yellow 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; Pigment Green 7, 10, and 36; Pigment Blue 15, 15: 1, 15: 2, 15: 3, 15: 4, 15: 5, 15: 6, 22, 24, 29, 56, 60, 61, 62, and 64; and Pigment Violet 1, 15, 19, 23, 27, 29, 30, 32, 37, 40, and 50. A plurality of these may be mixed and contained.

Examples of the dye include, but are not particularly limited to, dyes such as azo dye, anthraquinone dye, indigoid dye, triaryl methane dye, xanthene dye, alizarin dye, acridine dye, stilbene dye, thiazole dye, naphthol dye, quinoline dye, nitro dye, indamine dye, oxazine dye, phthalocyanine dye, and cyanine dye. A plurality of these may be mixed and contained.

<Molded Article>

Next, the molded article of the present invention will be described. The molded article of the present invention can be obtained by molding the resin composition of the present invention or another resin composition of the present invention. The molded article of the present invention has excellent dimensional stability, less warpage, and excellent dimensional accuracy.

Examples of the method for molding a molded article include, but are not particularly limited to, an injection molding method, an extrusion molding method, a blow molding method, a rotational molding method, a vacuum molding method, an inflation molding method, a calendar molding method, a slush molding method, a dip molding method, and a foam molding method.

Specific examples of a molded article include building materials, agricultural materials, parts for vehicles such as automobiles, packaging materials, miscellaneous goods, toys, home appliances, and medical products. More specific examples thereof include: automotive parts such as bumpers, dashboards, instrument panels, battery cases, luggage cases, door panels, door trims, and fender liners; resin parts for home appliances such as refrigerators, washing machines, and vacuum cleaners; household items such as tableware, bottle caps, buckets, and bathing items; resin parts for connection such as connectors; miscellaneous goods such as toys, storage containers, and synthetic paper; medical

molded articles such as medical packs, syringes, catheters, medical tubes, syringe product, infusion bag, reagent container, medicine container, and individual packaging of medicine; building materials such as wall materials, floor materials, window frames, wallpaper, and windows; electric wire covering materials; agricultural materials such as houses, tunnels, and flat yarn mesh bags; industrial materials such as palettes, pail cans, back grind tapes, LCD protective tapes, pipes, and modified silicone polymer for sealing; and food packaging materials such as wraps, trays, cups, films, bottles, caps, and storage containers; 3D printer materials; battery separator films; and fibers for clothing, woven fabric, and non-woven fabric. Of these, molded articles which are large molded articles such as bumpers, dashboards, instrument panels, pallets, and storage containers, and require to have both mechanical strength and dimensional stability.

Next, the method for producing a resin composition of the present invention will be described. The method for producing a resin composition of the present invention is intended to produce a resin composition that can improve dimensional stability during the molding of a molded article that is obtained by molding a resin composition containing a polyolefin-based resin. In the method for producing a resin composition of the present invention, the ratio t2/tlbetween the isothermal crystallization time t2 at 135°C of the resin composition containing a nucleating agent and the isothermal crystallization time t1 at 135°C of a nucleating agent-free resin composition having the same formulation as the resin composition except that the nucleating agent is not contained is 0.45 or more. The value of t2/t1 is preferably 0.5 or more and more preferably 0.7 or more. Note that t2/t1 is less than 1, and the upper limit of the value of t2/t1 is preferably 0.9 or less and more preferably 0.8 or less.

In addition, the method for producing another resin composition of the present invention is intended to produce a resin composition that improves dimensional stability during the molding of a molded article that is obtained by molding a resin composition containing a polyolefin-based resin. In the method for producing another resin composition of the present invention, the ratio T2/T1 between the time period T2 until a storage modulus curve and a loss modulus curve intersect with each other from the start of measurement when dynamic viscoelasticity measurement is carried out for the resin composition containing a nucleating agent by a method specified in ISO-6721-10 at a measurement temperature of 150°C and a measurement frequency of 0.1 Hz and the time period T1 until a storage modulus curve and a loss modulus curve intersect with each other from the start of measurement when dynamic viscoelasticity measurement is carried out for the nucleating agent-free resin composition having the same formulation as the resin composition except that the nucleating agent is not contained under the same conditions is 0.35 or more. Note that T2/T1 is less than 1, and the upper limit of the value of T2/T1 is preferably 0.9 or less and more preferably 0.8 or less.

As described above, the isothermal crystallization temperatures t1, t2 and the time periods T1, T2 until a storage modulus curve and a loss modulus curve intersect with each other are used as indexes of the crystallization rate of a resin composition. These are determined based on the type of a polyolefin-based resin, types of a nucleating agent and other components contained in the resin composition, the content ratios of these components in the polyolefin-based resin, and the dispersion states of these components in the resin composition. Further, the dispersion states of the components in the resin composition are determined based on the properties of the polyolefin-based resin as a granular material, and, physical properties (e.g., properties and specific gravity of the granular material) and chemical properties of the components, the method for producing the resin composition (e.g., production conditions, in particular, a method of mixing the polyolefin-based resin, a nucleating agent, and other components contained in the resin composition), and the like. Therefore, by appropriately designing these conditions, the isothermal crystallization temperatures t1, t2 and the time periods T1, T2 until a storage modulus curve and a loss modulus curve intersect with each other can be appropriately adjusted.

As described above, when the amount of the nucleating agent added to the polyolefin-based resin is increased, t2/t1 and T2/T1 decrease because the nucleating effect of the nucleating agent increases. In addition, when the particle size of the polyolefin-based resin is decreased, t2/t1 and T2/T1 decrease because the nucleating agent is more evenly dispersed in the resin composition. In addition to the above, when the polyolefin-based resin and the nucleating agent are sufficiently mixed, t2/t1 and T2/T1 decrease because the nucleating agent is more evenly dispersed in the resin composition. The resin composition of the present invention and another resin composition of the present invention can be a resin composition that is capable of imparting excellent mechanical strength to a molded article and has excellent dimensional stability during molding by setting t2/t1 and T2/T1 within specific ranges based on the above principles.

In the methods for producing the resin composition of the present invention and another resin composition of the present invention, a polyolefin-based resin powder or pellets, a nucleating agent, and optionally other additives may be blended by a method such as dry blending. Examples of the method of dry blending include, but are not particularly limited to, methods using known mixers such as an FM mixer and a rocking mixer. In addition, the nucleating agent and the other additives may be added simultaneously or separately to the polyolefin-based resin. Further, the nucleating agent and the other additives may be added as a masterbatch to the polyolefin-based resin. The methods for producing the resin composition of the present invention and another resin composition of the present invention contain a melt-kneading step. In this case, a resin composition of more uniform quality can be obtained. The method of melt-kneading is not particularly limited, and for example, a method such as a melt extrusion method using a single-screw extruder or a twin-screw extruder may be used.

EXAMPLES

Hereinafter, the present invention will be described in more detail with reference to Examples, but the present invention is not limited by the following Examples.

[Examples 1 to 68 and Comparative Examples 1 to 7]

The following were used as the polyolefin-based resin and the nucleating agent.

Polyolefin-based resin 1: Pellets prepared from impact copolymer polypropylene with MFR = 30 g/10 minutes under conditions of 230°C and a load of 2.16 kg
Polyolefin-based resin 2: Powder prepared from impact copolymer polypropylene with MFR = 30 g/10 minutes under conditions of 230°C and a load of 2.16 kg
Nucleating agent 1: ADK STAB NA-11 manufactured by ADEKA CORPORATION
Nucleating agent 2: ADK STAB NA-21 manufactured by ADEKA CORPORATION
Nucleating agent 3: ADK STAB NA-27 manufactured by ADEKA CORPORATION
Nucleating agent 4: ADK STAB NA-71 manufactured by ADEKA CORPORATION
Nucleating agent 5: ADK STAB NA-902 manufactured by ADEKA CORPORATION
Nucleating agent 6: Calcium 1,2-cyclohexanedicarboxylate
Nucleating agent 7: 1,3: 2,4-Bis-o-(3,4-dimethylbenzylidene)-D-sorbitol

Note that the polyolefin-based resin 1 and the polyolefin-based resin 2 were prepared as in the following manner.
Tetrakis[methylene-3-(3',5'-di-t-butyl-4-hydroxyphenyl)propionate]methane, tris(2,4-di-t-butylphenyl)phosphite, and calcium stearate were blended in impact copolymer polypropylene manufactured by Prime Polymer Co., Ltd. (trade name J707G; MFR = 30 g/10 minutes under conditions of 230°C and a load of 2.16 kg) at 0.05% by mass, 0.1% by mass, and 0.1% by mass, respectively, followed by mixing for 30 minutes using a locking mixer. The obtained mixture was melt-kneaded at 230°C using a twin-screw extruder (TEX28V manufactured by The Japan Steel Works, Ltd.), granulated, and dried at 60°C for 8 hours. The pellets thus obtained were sieved through a sieve with an opening of 4.75 mm. The pellets that passed through this sieve were further sieved with a sieve with an opening of 2.8 mm. The pellets remaining on the sieve were designated as polyolefin-based resin 1. Further, the pellets were crushed at room temperature by a crusher to obtain a powder and then sieved through a sieve with an opening of 1.4 mm. The powder that passed through this sieve was designated as polyolefin-based resin 2.

<Preparation of Resin Composition>

First, 100 parts by mass of polyolefin-based resins shown in Tables 1 to 12 were blended with the corresponding nucleating agents shown in the tables in the blending amounts shown in the tables, 33 parts by mass of an elastomer (trade name: Engage 8200 manufactured by The Dow Chemical Company), and 33 parts by mass of talc (trade name: Crown Talc PP manufactured by Matsumura Sangyo Co., Ltd.) and mixed by the corresponding mixing methods shown in the tables, thereby obtaining resin compositions. The mixing methods in Tables 1 to 12 are as follows.

Mixing method A: Mixing for 30 minutes using a locking mixer
Mixing method B: Mixing for 1 minute at 1000 rpm using a Henschel mixer
Mixing method C: Mixing by manual blending

The resin compositions thus obtained were melt-kneaded at 230°C using a twin-screw extruder (TEX28V manufactured by The Japan Steel Works, Ltd.), granulated, and then dried at 60°C for 8 hours, thereby obtaining resin composition pellets. In Tables 1 to 12, the unit of the blending amount is part(s) by mass.
Next, nucleating agent-free resin composition pellets were obtained in the same manner as above except that no nucleating agent was added.
Isothermal crystallization measurement and dynamic viscoelasticity measurement were carried out for the resin composition pellets and the nucleating agent-free resin composition pellets obtained above under the conditions described below, thereby determining t2/t1 and T2/T1. Further, mechanical strength and dimensional stability were evaluated for the resin composition pellets under the conditions described below.

<Isothermal Crystallization Measurement>

The resin composition pellets were weighed in an amount of 5 mg and introduced as samples into a differential

scanning calorimeter (Diamond DSC manufactured by PerkinElmer Co., Ltd.). First, each sample was heated from room temperature to 230°C at a temperature increase rate of 50°C/min under a nitrogen atmosphere, and then maintained at 230°C for 10 minutes. Subsequently, the sample was cooled to 135°C at a cooling rate of 200°C/min, and then maintained at 135°C after the temperature reached 135°C. In this measurement, the time point when the temperature reached 135°C was designated as the time point of the start of measurement, and the time period until the exothermic peak top appeared from the time point of the start of measurement was determined as t2 (sec). Differential scanning calorimetry was carried out under the same conditions also for the nucleating agent-free resin composition pellets, and the time period until the exothermic peak top appeared from the time point of the start of measurement was determined as t1 (sec). The value of t2/t1 was calculated from t2 and t1 obtained as described above. The results are shown in Tables 1 to 12.

<Dynamic Viscoelasticity Measurement>

The resin composition pellets were injection-molded using an injection molding machine (EC100-2A manufactured by Toshiba Machine Co., Ltd.) under conditions of an injection temperature of 230°C and a mold temperature of 50°C, thereby preparing flat plate-shaped test pieces 60 mm× 60 mm × 2 mm in size. Each test piece was allowed to stand still in an incubator at 23°C for 48 hours. Then, a disk-shaped test piece having a diameter of 25 mm was punched out from the flat plate-shaped test piece and introduced into a dynamic viscoelasticity measurement apparatus (apparatus name: Discovery Hybrid Rheometer, HR-2 manufactured by TA Instruments).

First, each sample was heated from room temperature to 230°C under a nitrogen atmosphere such that the sample was completely melted, and then maintained at 230°C for 10 minutes. Subsequently, the sample was cooled to 150°C at a cooling rate of 15°C/min, and then maintained at 150°C after the temperature reached 150°C, and dynamic viscoelasticity measurement specified in ISO-6721-10 was carried out under conditions of a measurement temperature of 150°C and a measurement frequency of 0.1 Hz. In this measurement, the time point when the temperature reached 150°C was designated as the time point of the start of measurement, and the time period until a storage modulus curve and a loss modulus curve intersected with each other from the time point of the start of measurement was determined as T2 (sec). Dynamic viscoelasticity measurement was carried out under the same conditions also for the nucleating agent-free resin compositions, and the time period until a storage modulus curve and a loss modulus curve intersected with each other from the time point of the start of measurement was determined as T1 (sec). The value of T2/T1 was calculated from T2 and T1 obtained as described above. The results are shown in Tables 1 to 12.

<Mechanical Strength>

The resin composition pellets were injection-molded using an injection molding machine (EC100-2A manufactured by Toshiba Machine Co., Ltd.) under conditions of an injection temperature of 230°C and a mold temperature of 40°C, thereby preparing flat plate-shaped test pieces 80 mm× 10 mm × 4 mm in size. Each test piece was allowed to stand still in an incubator at 23°C for 48 hours. Then, the flexural modulus was measured according to ISO 178 using a bending tester (AG-IS manufactured by Shimadzu Corporation). The values of flexural modulus (GPa) thus obtained were used as indexes of mechanical strength. The results are shown in Tables 1 to 12.

<Dimensional Stability>

The resin composition pellets were injection-molded using an injection molding machine (EC-100-2A manufactured by Toshiba Machine Co., Ltd.) under conditions of an injection temperature of 230°C and a mold temperature of 50°C, thereby preparing flat plate-shaped test pieces 60 mm× 60 mm × 2 mm in size. Each test piece was allowed to stand still in an incubator at 23°C for 48 hours. Then, the dimension (mm) in the resin flow direction and the dimension (mm) in the direction perpendicular to the resin flow direction of the test piece were measured to calculate the ratio MD (machine direction) / TD (transverse direction) of the molding shrinkage rate in the resin flow direction MD (%) and the molding shrinkage rate in the direction perpendicular to the resin flow direction TD (%). This was used as an index of dimensional stability. The results are shown in Tables 1 to 12. Here, MD/TD is a value indicating the shrinkage rate anisotropy at the time of molding of a molded article, and it can be said that the closer this value is to 1, the higher the dimensional stability of the molded product.

[Table 1]

| | | Example 1 | Example 2 | Example 3 | Example 4 | Example 5 | Example 6 | Example 7 |
|---|---|---|---|---|---|---|---|---|
| Formulation of Polyolefin-based Resin Composition | Polyolefin-based resin 1 | 100 | 100 | 100 | 100 | - | - | - |
| | Polyolefin-based resin 2 | - | - | - | - | 100 | 100 | 100 |
| | Nucleating agent 1 | 0.05 | 0.1 | 0.15 | 0.2 | 0.05 | 0.08 | 0.1 |
| | Nucleating agent 2 | - | - | - | - | - | - | - |
| | Nucleating agent 3 | - | - | - | - | - | - | - |
| | Nucleating agent 4 | - | - | - | - | - | - | - |
| | Nucleating agent 5 | - | - | - | - | - | - | - |
| | Nucleating agent 6 | - | - | - | - | - | - | - |
| | Nucleating agent 7 | - | - | - | - | - | - | - |
| Mixing method | | A | A | A | A | B | B | B |
| t2/t1 | | 0.89 | 0.70 | 0.55 | 0.51 | 0.88 | 0.60 | 0.54 |
| T2/T1 | | 0.53 | 0.45 | 0.45 | 0.39 | 0.54 | 0.44 | 0.40 |
| Mechanical Strength | Flexural Modulus (GPa) | 1.4 | 1.4 | 1.4 | 1.5 | 1.4 | 1.5 | 1.5 |
| Dimensional Stability | MD/TD | 0.88 | 0.87 | 1.00 | 0.89 | 0.78 | 0.79 | 0.76 |

[Table 2]

| | | Example 8 | Example 9 | Example 10 | Example 11 | Comparative Example 1 | Comparative Example 2 |
|---|---|---|---|---|---|---|---|
| Formulation of Polyolefin-based Resin Composition | Polyolefin-based resin 1 | - | - | - | - | - | - |
| | Polyolefin-based resin 2 | 100 | 100 | 100 | 100 | 100 | 100 |
| | Nucleating agent 1 | 0.05 | 0.08 | 0.1 | 0.2 | - | 0.2 |
| | Nucleating agent 2 | - | - | - | - | - | - |
| | Nucleating agent 3 | - | - | - | - | - | - |
| | Nucleating agent 4 | - | - | - | - | - | - |
| | Nucleating agent 5 | - | - | - | - | - | - |
| | Nucleating agent 6 | - | - | - | - | - | - |
| | Nucleating agent 7 | - | - | - | - | - | - |
| Mixing method | | C | C | C | C | B | B |
| t2/t1 | | 0.89 | 0.68 | 0.61 | 0.48 | - | 0.40 |
| T2/T1 | | 0.55 | 0.48 | 0.44 | 0.35 | - | 0.29 |
| Mechanical Strength | Flexural Modulus (GPa) | 1.4 | 1.4 | 1.4 | 1.5 | 1.3 | 1.5 |
| Dimensional Stability | MD/TD | 0.84 | 0.84 | 0.82 | 0.78 | 0.81 | 0.72 |

[Table 3]

| | | Example 12 | Example 13 | Example 14 | Example 15 | Example 16 | Example 17 | Example 18 |
|---|---|---|---|---|---|---|---|---|
| Formulation of Polyolefin-based Resin Composition | Polyolefin-based resin 1 | 100 | 100 | 100 | 100 | 100 | - | - |
| | Polyolefin-based resin 2 | - | - | - | - | - | 100 | 100 |
| | Nucleating agent 1 | - | - | - | - | - | - | - |
| | Nucleating agent 2 | 0.05 | 0.1 | 0.15 | 0.2 | 0.3 | 0.05 | 0.1 |
| | Nucleating agent 3 | - | - | - | - | - | - | - |
| | Nucleating agent 4 | - | - | - | - | - | - | - |
| | Nucleating agent 5 | - | - | - | - | - | - | - |
| | Nucleating agent 6 | - | - | - | - | - | - | - |
| | Nucleating agent 7 | - | - | - | - | - | - | - |
| Mixing method | | A | A | A | A | A | B | B |
| t2/t1 | | 0.65 | 0.58 | 0.53 | 0.48 | 0.45 | 0.85 | 0.86 |
| T2/T1 | | 0.73 | 0.58 | 0.58 | 0.51 | 0.36 | 0.76 | 0.53 |
| Mechanical Strength | Flexural Modulus (GPa) | 1.4 | 1.4 | 1.5 | 1.4 | 1.5 | 1.4 | 1.5 |
| Dimensional Stability | MD/TD | 1.10 | 0.94 | 0.86 | 1.03 | 0.90 | 0.76 | 0.76 |

[Table 4]

| | | Example 19 | Example 20 | Example 21 | Example 22 | Example 23 | Example 24 | Comparative Example 3 |
|---|---|---|---|---|---|---|---|---|
| Formulation of Polyolefin-based Resin Composition | Polyolefin-based resin 1 | - | - | - | - | - | - | - |
| | Polyolefin-based resin 2 | 100 | 100 | 100 | 100 | 100 | 100 | 100 |
| | Nucleating agent 1 | - | - | - | - | - | - | - |
| | Nucleating agent 2 | 0.15 | 0.2 | 0.05 | 0.1 | 0.15 | 0.3 | 0.3 |
| | Nucleating agent 3 | - | - | - | - | - | - | - |
| | Nucleating agent 4 | - | - | - | - | - | - | - |
| | Nucleating agent 5 | - | - | - | - | - | - | - |
| | Nucleating agent 6 | - | - | - | - | - | - | - |
| | Nucleating agent 7 | - | - | - | - | - | - | - |
| Mixing method | | B | B | C | C | C | C | B |
| t2/t1 | | 0.67 | 0.65 | 0.86 | 0.85 | 0.69 | 0.45 | 0.44 |
| T2/T1 | | 0.51 | 0.48 | 0.75 | 0.6 | 0.63 | 0.35 | 0.34 |
| Mechanical Strength | Flexural Modulus (GPa) | 1.5 | 1.5 | 1.4 | 1.4 | 1.5 | 1.5 | 1.5 |
| Dimensional Stability | MD/TD | 0.78 | 0.78 | 1.03 | 0.86 | 0.81 | 0.79 | 0.71 |

[Table 5]

| | | Example 25 | Example 26 | Example 27 | Example 28 | Example 29 |
|---|---|---|---|---|---|---|
| Formulation of Polyolefin-based Resin Composition | Polyolefin-based resin 1 | 100 | 100 | 100 | - | - |
| | Polyolefin-based resin 2 | - | - | - | 100 | 100 |
| | Nucleating agent 1 | - | - | - | - | - |
| | Nucleating agent 2 | - | - | - | - | - |
| | Nucleating agent 3 | 0.05 | 0.1 | - | 0.05 | 0.05 |
| | Nucleating agent 4 | - | - | 0.05 | - | - |
| | Nucleating agent 5 | - | - | - | - | - |
| | Nucleating agent 6 | - | - | - | - | - |
| | Nucleating agent 7 | - | - | - | - | - |
| Mixing method | | A | A | A | B | C |
| t2/t1 | | 0.55 | 0.47 | 0.64 | 0.51 | 0.58 |
| T2/T1 | | 0.40 | 0.35 | 0.54 | 0.38 | 0.42 |
| Mechanical Strength | Flexural Modulus (GPa) | 1.5 | 1.5 | 1.4 | 1.5 | 1.5 |
| Dimensional Stability | MD/TD | 0.82 | 0.76 | 0.99 | 0.76 | 0.83 |

[Table 6]

| | | Example 30 | Example 31 | Example 32 | Comparative Example 4 |
|---|---|---|---|---|---|
| Formulation of Polyolefin-based Resin Composition | Polyolefin-based resin 1 | - | - | - | - |
| | Polyolefin-based resin 2 | 100 | 100 | 100 | 100 |
| | Nucleating agent 1 | - | - | - | - |
| | Nucleating agent 2 | - | - | - | - |
| | Nucleating agent 3 | 0.1 | - | - | 0.1 |
| | Nucleating agent 4 | - | 0.05 | 0.1 | - |
| | Nucleating agent 5 | - | - | - | - |
| | Nucleating agent 6 | - | - | - | - |
| | Nucleating agent 7 | - | - | - | - |
| Mixing method | | C | C | C | B |
| t2/t1 | | 0.45 | 0.66 | 0.61 | 0.40 |
| T2/T1 | | 0.35 | 0.58 | 0.51 | 0.26 |
| Mechanical Strength | Flexural Modulus (GPa) | 1.5 | 1.4 | 1.4 | 1.5 |
| Dimensional Stability | MD/TD | 0.77 | 1.01 | 0.93 | 0.72 |

[Table 7]

| | | Example 33 | Example 34 | Example 35 | Example 36 | Example 37 | Example 38 | Example 39 | Example 40 |
|---|---|---|---|---|---|---|---|---|---|
| Formulation of Polyolefin-based Resin Composition | Polyolefin-based resin 1 | 100 | 100 | 100 | 100 | 100 | - | - | - |
| | Polyolefin-based resin 2 | - | - | - | - | - | 100 | 100 | 100 |
| | Nucleating agent 1 | - | - | - | - | - | - | - | - |
| | Nucleating agent 2 | - | - | - | - | - | - | - | - |
| | Nucleating agent 3 | - | - | - | - | - | - | - | - |
| | Nucleating agent 4 | - | - | - | - | - | - | - | - |
| | Nucleating agent 5 | 0.05 | 0.1 | 0.15 | 0.2 | 0.3 | 0.05 | 0.1 | 0.15 |
| | Nucleating agent 6 | - | - | - | - | - | - | - | - |
| | Nucleating agent 7 | - | - | - | - | - | - | - | - |
| Mixing method | | A | A | A | A | A | B | B | B |
| t2/t1 | | 0.98 | 0.95 | 0.70 | 0.57 | 0.48 | 0.97 | 0.93 | 0.66 |
| T2/T1 | | 0.89 | 0.60 | 0.51 | 0.44 | 0.39 | 0.89 | 0.55 | 0.45 |
| Mechanical Strength | Flexural Modulus (GPa) | 1.4 | 1.4 | 1.5 | 1.5 | 1.5 | 1.5 | 1.5 | 1.5 |
| Dimensional Stability | MD/TD | 0.93 | 0.90 | 0.89 | 0.86 | 0.83 | 0.92 | 0.89 | 0.81 |

[Table 8]

| | | Example 41 | Example 42 | Example 43 | Example 44 | Example 45 | Example 46 | Comparative Example 5 |
|---|---|---|---|---|---|---|---|---|
| Formulation of Polyolefin-based Resin Composition | Polyolefin-based resin 1 | - | - | - | - | - | - | - |
| | Polyolefin-based resin 2 | 100 | 100 | 100 | 100 | 100 | 100 | 100 |
| | Nucleating agent 1 | - | - | - | - | - | - | - |
| | Nucleating agent 2 | - | - | - | - | - | - | - |
| | Nucleating agent 3 | - | - | - | - | - | - | - |
| | Nucleating agent 4 | - | - | - | - | - | - | - |
| | Nucleating agent 5 | 0.2 | 0.05 | 0.1 | 0.15 | 0.2 | 0.3 | 0.3 |
| | Nucleating agent 6 | - | - | - | - | - | - | - |
| | Nucleating agent 7 | - | - | - | - | - | - | - |
| Mixing method | | B | C | C | C | C | C | B |
| t2/t1 | | 0.48 | 0.99 | 0.94 | 0.74 | 0.61 | 0.46 | 0.44 |
| T2/T1 | | 0.36 | 0.93 | 0.63 | 0.55 | 0.48 | 0.36 | 0.34 |
| Mechanical Strength | Flexural Modulus (GPa) | 1.5 | 1.4 | 1.4 | 1.4 | 1.5 | 1.5 | 1.5 |
| Dimensional Stability | MD/TD | 0.83 | 0.95 | 0.93 | 0.89 | 0.87 | 0.80 | 0.73 |

[Table 9]

| | | Example 47 | Example 48 | Example 49 | Example 50 | Example 51 | Example 52 |
|---|---|---|---|---|---|---|---|
| Formulation of Polyolefin-based Resin Composition | Polyolefin-based resin 1 | 100 | 100 | 100 | 100 | - | - |
| | Polyolefin-based resin 2 | - | - | - | - | 100 | 100 |
| | Nucleating agent 1 | - | - | - | - | - | - |
| | Nucleating agent 2 | - | - | - | - | - | - |
| | Nucleating agent 3 | - | - | - | - | - | - |
| | Nucleating agent 4 | - | - | - | - | - | - |
| | Nucleating agent 5 | - | - | - | - | - | - |
| | Nucleating agent 6 | 0.05 | 0.1 | 0.2 | 0.3 | 0.05 | 0.1 |
| | Nucleating agent 7 | - | - | - | - | - | - |
| Mixing method | | A | A | A | A | B | B |
| t2/t1 | | 0.93 | 0.85 | 0.69 | 0.53 | 0.82 | 0.70 |
| T2/T1 | | 0.88 | 0.78 | 0.57 | 0.50 | 0.78 | 0.64 |
| Mechanical Strength | Flexural Modulus (GPa) | 1.4 | 1.4 | 1.4 | 1.4 | 1.4 | 1.4 |
| Dimensional Stability | MD/TD | 0.98 | 0.81 | 0.78 | 0.76 | 0.84 | 0.80 |

[Table 10]

| | | Example 53 | Example 54 | Example 55 | Example 56 | Example 57 | Comparative Example 6 |
|---|---|---|---|---|---|---|---|
| Formulation of Polyolefin-based Resin Composition | Polyolefin-based resin 1 | - | - | - | - | - | - |
| | Polyolefin-based resin 2 | 100 | 100 | 100 | 100 | 100 | 100 |
| | Nucleating agent 1 | - | - | - | - | - | - |
| | Nucleating agent 2 | - | - | - | - | - | - |
| | Nucleating agent 3 | - | - | - | - | - | - |
| | Nucleating agent 4 | - | - | - | | | - |
| | Nucleating agent 5 | - | - | - | - | - | - |
| | Nucleating agent 6 | 0.2 | 0.05 | 0.1 | 0.2 | 0.3 | 0.3 |
| | Nucleating agent 7 | - | - | - | - | - | - |
| Mixing method | | B | C | C | C | C | B |
| t2/t1 | | 0.55 | 0.95 | 0.88 | 0.72 | 0.53 | 0.43 |
| T2/Tl | | 0.49 | 0.90 | 0.78 | 0.65 | 0.51 | 0.33 |
| Mechanical Strength | Flexural Modulus (GPa) | 1.4 | 1.4 | 1.4 | 1.4 | 1.5 | 1.5 |
| Dimensional Stability | MD/TD | 0.76 | 0.93 | 0.83 | 0.84 | 0.76 | 0.71 |

[Table 11]

| | | Example 58 | Example 59 | Example 60 | Example 61 | Example 62 | Example 63 |
|---|---|---|---|---|---|---|---|
| Formulation of Polyolefin-based Resin Composition | Polyolefin-based resin 1 | 100 | 100 | 100 | 100 | - | - |
| | Polyolefin-based resin 2 | - | - | - | - | 100 | 100 |
| | Nucleating agent 1 | - | - | - | - | - | - |
| | Nucleating agent 2 | - | - | - | - | - | - |
| | Nucleating agent 3 | - | - | - | - | - | - |
| | Nucleating agent 4 | - | - | - | - | - | - |
| | Nucleating agent 5 | - | - | - | - | - | - |
| | Nucleating agent 6 | - | - | - | - | - | - |
| | Nucleating agent 7 | 0.1 | 0.2 | 0.3 | 0.5 | 0.1 | 0.2 |
| Mixing method | | A | A | A | A | B | B |
| t2/t1 | | 0.97 | 0.94 | 0.72 | 0.70 | 0.93 | 0.86 |
| T2/T1 | | 0.92 | 0.97 | 0.69 | 0.66 | 0.90 | 0.71 |
| Mechanical Strength | Flexural Modulus (GPa) | 1.3 | 1.4 | 1.4 | 1.4 | 1.4 | 1.4 |
| Dimensional Stability | MD/TD | 1.10 | 1.09 | 0.95 | 0.80 | 1.09 | 0.91 |

[Table 12]

| | | Example 64 | Example 65 | Example 66 | Example 67 | Example 68 | Comparative Example 7 |
|---|---|---|---|---|---|---|---|
| Formulation of Polyolefin-based Resin Composition | Polyolefin-based resin 1 | - | - | - | - | - | - |
| | Polyolefin-based resin 2 | 100 | 100 | 100 | 100 | 100 | 100 |
| | Nucleating agent 1 | - | - | - | - | - | - |
| | Nucleating agent 2 | - | - | - | - | - | - |
| | Nucleating agent 3 | - | - | - | - | - | - |
| | Nucleating agent 4 | - | - | - | - | - | - |
| | Nucleating agent 5 | - | - | - | - | - | - |
| | Nucleating agent 6 | - | - | - | - | - | - |
| | Nucleating agent 7 | 0.3 | 0.1 | 0.2 | 0.3 | 0.5 | 0.5 |
| Mixing method | | B | C | C | C | C | B |
| t2/t1 | | 0.66 | 0.97 | 0.96 | 0.75 | 0.71 | 0.44 |
| T2/T1 | | 0.44 | 0.93 | 0.87 | 0.71 | 0.65 | 0.32 |
| Mechanical Strength | Flexural Modulus (GPa) | 1.4 | 1.3 | 1.4 | 1.4 | 1.4 | 1.4 |
| Dimensional Stability | MD/TD | 0.83 | 1.09 | 1.01 | 0.97 | 0.85 | 0.72 |

From the results shown in Tables 1 to 12, the resin compositions of Examples 1 to 68 were found to be excellent

in mechanical strength and dimensional stability during molding. Meanwhile, from the results shown in Tables 1 to 12, it could not be said that the resin compositions of Comparative Examples 1 to 7 were sufficient in mechanical strength or dimensional stability during molding.

Based on the above, it was confirmed that the resin composition of the present invention is capable of imparting excellent mechanical strength to a molded article and has excellent dimensional stability during molding.

## Claims

1. A resin composition comprising a polyolefin-based resin and a nucleating agent, wherein a ratio t2/t1 between

   an isothermal crystallization time t2 at 135°C of the resin composition and
   an isothermal crystallization time t1 at 135°C of a nucleating agent-free resin composition having the same formulation as the resin composition except that the nucleating agent is not contained is 0.45 or more.

2. A resin composition comprising a polyolefin-based resin and a nucleating agent, wherein a ratio T2/T1 between

   a time period T2 until a storage modulus curve and a loss modulus curve intersect with each other from the start of measurement when dynamic viscoelasticity measurement is carried out for the resin composition by a method specified in ISO-6721-10 at a measurement temperature of 150°C and a measurement frequency of 0.1 Hz and
   a time period T1 until a storage modulus curve and a loss modulus curve intersect with each other from the start of measurement when dynamic viscoelasticity measurement is carried out for the nucleating agent-free resin composition having the same formulation as the resin composition except that the nucleating agent is not contained by a method specified in ISO-6721-10 at a measurement temperature of 150°C and a measurement frequency of 0.1 Hz is 0.35 or more.

3. The resin composition according to claim 1 or 2, wherein the nucleating agent is a composition represented by the following general formula (1):

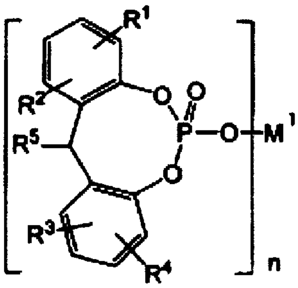

(1)

(in the general formula (1), $R^1$ to $R^5$ each independently denote a hydrogen atom or a linear or branched alkyl group having 1 to 6 carbon atoms, n denotes 1 or 2, $M^1$ denotes a hydrogen atom, an alkali metal, or dihydroxyaluminum when n is 1, and $M^1$ denotes an alkali earth metal, zinc, or hydroxyaluminum when n is 2).

4. The resin composition according to any one of claims 1 to 3, wherein the polyolefin-based resin comprises an elastomer.

5. The resin composition according to any one of claims 1 to 4, further comprising a filler.

6. A molded article obtained by molding the resin composition according to any one of claims 1 to 5.

7. A method for producing a resin composition comprising a polyolefin-based resin and a nucleating agent, wherein a ratio t2/t1 between

   an isothermal crystallization time t2 at 135°C of the resin composition and
   an isothermal crystallization time t1 at 135°C of a nucleating agent-free resin composition having the same formulation as the resin composition except that the nucleating agent is not contained is 0.45 or more.

**8.** A method for producing a resin composition comprising a polyolefin-based resin and a nucleating agent, wherein a ratio T2/T1 between

a time period T2 until a storage modulus curve and a loss modulus curve intersect with each other from the start of measurement when dynamic viscoelasticity measurement is carried out for the resin composition by a method specified in ISO-6721-10 at a measurement temperature of 150°C and a measurement frequency of 0.1 Hz and
a time period T1 until a storage modulus curve and a loss modulus curve intersect with each other from the start of measurement when dynamic viscoelasticity measurement is carried out for the nucleating agent-free resin composition having the same formulation as the resin composition except that the nucleating agent is not contained by a method specified in ISO-6721-10 at a measurement temperature of 150°C and a measurement frequency of 0.1 Hz is 0.35 or more.

## INTERNATIONAL SEARCH REPORT

International application No.
PCT/JP2020/046806

A. CLASSIFICATION OF SUBJECT MATTER
C08K 5/523(2006.01)i; C08L 23/00(2006.01)i
FI: C08L23/00; C08K5/523

According to International Patent Classification (IPC) or to both national classification and IPC

B. FIELDS SEARCHED

Minimum documentation searched (classification system followed by classification symbols)
C08K5/523; C08L23/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
JSTPlus/JMEDPlus/JST7580 (JDreamIII)

C. DOCUMENTS CONSIDERED TO BE RELEVANT

| Category* | Citation of document, with indication, where appropriate, of the relevant passages | Relevant to claim No. |
|---|---|---|
| X | WO 2017/150662 A1 (ADEKA CORPORATION) 08 September 2017 (2017-09-08) claims, examples | 1-8 |
| X | JP 2016-089176 A (SUNALLOMER LTD.) 23 May 2016 (2016-05-23) claims, comparative examples | 1-8 |
| X | US 2019/0136028 A1 (MILLIKEN & COMPANY) 09 May 2019 (2019-05-09) claims, samples | 1-8 |
| A | JP 58-001736 A (ADEKA ARGUS CHEM CO., LTD.) 07 January 1983 (1983-01-07) entire text | 1-8 |

☐ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
03 February 2021 (03.02.2021)

Date of mailing of the international search report
16 February 2021 (16.02.2021)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**
Information on patent family members

International application No.
PCT/JP2020/046806

| Patent Documents referred in the Report | Publication Date | Patent Family | Publication Date |
|---|---|---|---|
| WO 2017/150662 A1 | 08 Sep. 2017 | US 2019/0062527 A1<br>claims, examples<br>EP 3424993 A1<br>claims, examples<br>CN 108699291 A<br>pp. 2, 39-60<br>KR 10-2018-0114222 A<br>pp. 3-4, 38-61 | |
| JP 2016-089176 A | 23 May 2016 | (Family: none) | |
| US 2019/0136028 A1 | 09 May 2019 | WO 2019/094201 A1<br>claims, sample | |
| JP 58-001736 A | 07 Jan. 1983 | US 4463113 A<br>EP 68326 A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S581736 A
- JP S462280 B
- JP S5030039 B
- JP S5129129 B
- JP H336839 B
- JP S61174270 A
- JP H5179052 A
- JP 2010132927 A
- JP H710989 A
- US 6552131 B
- JP 2016023254 A